Europäisches Patentamt

European Patent Office

Office européen des brevets

(11) Numéro de publication: **0 325 249**

**A2**

## DEMANDE DE BREVET EUROPEEN

(21) Numéro de dépôt: **89100882.3**

(51) Int. Cl.4: **C04B 41/45**

(22) Date de dépôt: **19.01.89**

(30) Priorité: **21.01.88 IT 8550988**

(43) Date de publication de la demande:
**26.07.89 Bulletin 89/30**

(84) Etats contractants désignés:
**AT BE CH DE ES FR GB GR IT LI LU NL SE**

(71) Demandeur: **Toncelli, Luca**
**Via Giovanni XXIII, 2**
**I-36061 Bassano del Grappa (Vicenza)(IT)**

(72) Inventeur: **Toncelli, Luca**
**Via Giovanni XXIII, 2**
**I-36061 Bassano del Grappa (Vicenza)(IT)**

(74) Mandataire: **Bettello, Luigi, Dott. Ing.**
**Via Col d'Echele, 25**
**I-36100 Vicenza(IT)**

(54) **Procédé pour le renfort structurel d'articles fragiles en pierre ou aggloméré de pierre, ainsi qu'articles renforcés obtenus.**

(57) Suivant l'invention le renfort est obtenu au moyen d'une série d'opérations, à savoir :

a) chauffage du matériau de base ;

b) pulvérisation d'une résine chargée de fibres de verre ou similaires sur l'une des faces du matériau préalablement enduite d'un adhésif de type "primer" ;

c) saupoudrage de ladite face avec de la poudre de pierre présentant une granulométrie constante et définie ;

d) mise en vibration ou en pression du produit en vue de favoriser la cohésion de la poudre avec la résine ;

e) catalyse de la résine, éventuellement à chaud ;

f) applanissement de la surface non traitee au moyen d'opérations mécaniques.

Ce processus est éventuellement répété sur la face opposée lorsqu'on prévoit la taille du matériau en épaisseur en vue de l'obtention de deux articles très minces.

Le procédé est applicable à des matériaux en aggloméré en vue de la réalisation d'articles très minces, permettant notamment l'utilisation d'un matériau de départ de nature très fragile.

FIG. 2

La présente invention a pour objets un procédé pour le renfort structurel de matériaux en pierre de nature fragile et défectueuse, ainsi que les articles obtenus par la mise en oeuvre dudit procédé.

A l'heure actuelle la pierre naturelle qui ne comporte pas des propriétés structurelles suffisantes par suite de défauts internes, tels que fissurations ou présence d'inclusions de terre ou similaires, est considérée comme un déchet de carrière et n'est pas utilisée en tant que tel. Le déchet de carrière constitue une caractéristique qu'on rencontre dans n'importe quelle carrière, même s'il est de nature variable. La variation peut aller d'un minimum de 5 % jusqu'à près de 100 %.

Il en résulte que lorsque ce déchet dépasse une valeur déterminée, la carrière n'est plus économiquement exploitable . Dans tous les cas le déchet comporte une influence déterminante sur le coût des produits extraits, travaillés et finalement vendus.

L'un des buts de l'invention vise, à l'aide d'un procédé de mise en oeuvre simple et économique, à récupérer, de manière totale ou partielle, des blocs de pierre défectueuse en conférant au produit final une résistance structurelle appropriée, propre à permettre son utilisation pour des pavages ou revêtements, et ce même sous des épaisseurs réduites.

Un autre but de l'invention consiste à augmenter le rendement d'une carrière, en abaissant les prix de revient du produit extrait et en donnant la possibilité d'abaisser le coût moyen d'exploitation de la carrière en diminuant la teneur du rebut.

L'invention a encore pour but de renforcer les matériaux agglomérés en vue de permettre l'obtention d'un article d'épaisseur réduite et de poids limité tout en maintenant les caractéristiques mécaniques et esthétiques du produit, celui-ci étant susceptible d'être utilisé pour des pavages ou des revêtements.

Le procédé suivant l'invention est caractérisé en ce qu'il comprend les phases opérationnelles suivantes :
- chauffage du matériau de base en vue d'éliminer toute trace d'humidité qui pourrait faire obstacle à la catalyse d'une résine ;
- traitement de la face à traiter à l'aide d'un adhésif de type "primer" en vue de favoriser l'adhérence de la résine sur le matériau ;
- enduction d'une face du matériau à l'aide d'une résine chargée de fibres de verre ou similaires afin d'obtenir son renforcement ;
- saupoudrage d'une poudre de pierre à granulométrie constante et définie sur la face à traiter ;
- pénétration de la poudre dans la couche de résine par vibration ou compression ;
- catalyse de la résine, éventuellement à chaud ;
- aplanissement de la face traitée au moyen d'opérations mécaniques ;
- finition de la surface non traitée en vue de l'obtention d'un article présentant des caractéristiques esthétiques satisfaisantes.

Le dessin annexé, donné à titre d'exemple, permettra de mieux comprendre l'invention, les caractéristiques qu'elle présente et les avantages qu'elle est susceptible de procurer :

Fig. 1 illustre la phase de pulvérisation de la résine chargée de fibres de verre ou similaires sur la surface à traiter d'un article en pierre.

Fig. 2 montre de la même manière la phase de saupoudrage avec la poudre de verre ;

Fig. 3 illustre enfin la phase d'incorporation de la poudre sur la face enduite de résine.

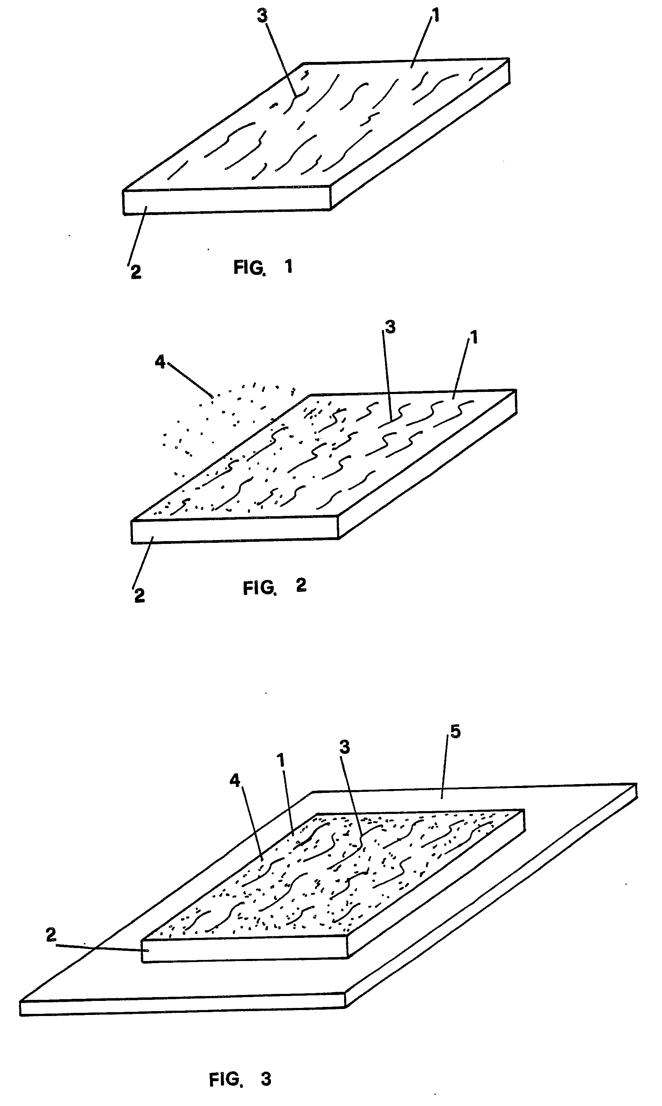

Conformément au procédé suivant l'invention, on applique sur l'une des deux faces principales 1 d'un article 2, préalablement réchauffée et enduite d'un adhésif "primer" (il s'agit d'un agent qui garantit l'adhérence de la résine sur la surface traitée) d'une résine 3 chargée de fibres de verre ou autre matériau, et ce de manière uniforme à la manière illustrée en fig. 1. Cette application peut être opérée à l'aide d'un dispositif de pulvérisation, du type de ceux largement répandus sur le marché, ou au moyen de tout autre système.

Une fois la résine appliquée sur la face 1 du produit 2, on soupoudre sur cette même surface 1, de manière uniforme, de la poudre de pierre 4 (voir fig. 2) présentant une granulométrie parfaitement constante et bien définie. Après ce saupoudrage l'article 2 est placé sur un plateau vibrant 5 (fig. 3) ou est soumis à une pression mécanique propre à faciliter la cohésion entre la résine et la poudre.

Le produit 2 ainsi obtenu est alors sooumis à une opération de catalyse ; en vue d'accélérer ce processus, il peut être chauffé. Une fois la catalyse obtenue, la face traitée 1 est soumise à une opération mécanique de calibrage en vue de la rendre parfaitement plane. La face non traitée peut par contre être soumise aux opérations usuelles de nivelage, de polissage ou de biseautage en vue de la réalisation d'un article présentant l'aspect esthétique désiré.

L'aticle ainsi récupéré comporte une résistance structurelle supérieure à un produit sain.

En fait la résistance structurelle acquise est due à la couche de résine chargée de fibres de verre ou similaires, par exemple des fils d'acier ou autre métal.

L'incorporation de la poudre a principalement pour but d'obtenir une surface rugueuse et poreuse qui favorise son adhérence sur le plan de pose. L'article réalisé par mise en oeuvre du procédé suivant l'invention peut présenter les formes et les dimensions les plus diverses, en fonction des desiderats.

On notera par ailleurs que ce procédé se révèle particulièrement apte à la réalisation d'articles de faible épaisseur. En pareil cas le procédé est mis en oeuvre sur les deux faces d'un matériau dont l'épaisseur est suffisante pour être manipulé ; le matériau ainsi renforcé est ensuite taillé en épaisseur en vue d'obtenir deux articles minces de nature déjà renforcée, ce qui présente l'avantage d'obtenir un doublement de productivité ainsi que la possiblité de réaliser un produit, qui dans le cas d'un aggloméré de marbre ou autre, présente des caractéristiques mécaniques élevées et un poids réduit.

Les articles minces ainsi obtenus sont susceptibles d'être soumis, sur les faces non traitées, aux opérations usuelles de calibrage, de nivelage, de polissage et de biseautage.

## Revendications

1. Procédé pour le renforcement structurel d'articles fragiles en pierre ou en aggloméré de pierre, caractérisé en ce qu'il comprend les phases opérationnelles suivantes :
- chauffage du matériau de base en vue d'éliminer toute trace d'humidité ;
- application sur la surface à traiter d'un adhésif spécial propre à favoriser l'adhérence de la résine sur le matériau ;
- enduction d'une face du matériau à l'aide d'une résine apte à assurer le renforcement ;
- saupoudrage de poudre de pierre de granulométrie constante et définie sur la face enduite ;
- compactage mécanique de la poudre de pierre, par vibration ou compression à pression atmosphérique, en vue de faciliter la pénétration de cette poudre dans la couche de résine ;
- catalyse de la résine, éventuellement à chaud ;
- aplanissement de la surface au moyen d'opérations mécaniques, en permettant de ce fait de récupérer un matériau qui serait autrement considéré comme un rébut par suite de la présence de fissurations ou d'inclusions de terre.

2. Procédé suivant la revendication 1, caractérisé en que la résine appliquée est chargée de fibres de verre ou autre matière propres à augmenter la résistance structurelle des matériaux présentant des fissurations importantes.

3. Procédé suivant l'une quelconque des revendications 1 er 2, caractérisé en ce qu'il est mis en oeuvre sur les deux faces d'un matériau dont l'épaisseur est suffisante pour permettre sa manipulation, ce matériau étant soumis à une opération de taille suivant son épaisseur en vue de l'obtention de deux éléments minces présentant une face renforcée et une face propre à être travaillée et polie pour lui conférer l'aspect esthétique désiré.

4. Article obtenu par mise en oeuvre du procédé suivant l'une quelconque des revendications 1 à 3, caractérisé en ce qu'il est constitué par un matériau en pierre comportant une face renforcée à l'aide d'une résine chargée de fibres de verre ou similaires, ladite face étant recouverte de poudre de pierre tandis que la face opposée est travaillée, polie et finie pour permettre l'utilisation de l'article comme pavage ou revêtement.

5. Article suivant la revendication 4, caractérisé en ce que le matériau est constitué par un aggloméré de marbre ou autre pierre.

FIG. 1

FIG. 2

FIG. 3